# EUROPEAN PATENT APPLICATION

(11) **EP 4 550 746 A1**
(43) Date of publication of application: **07.05.2025**
(21) Application number: 23206990.6
(22) Date of filing: 31.10.2023
(51) Int. Cl.: H04L 43/12, H04L 43/50

(54) **SYSTEMS AND METHODS FOR CRASH DETECTION USING A REMOTE TEST BOX**

(71) Applicant: Telit Cinterion Deutschland GmbH, 81541 München (DE)
(72) Inventor: BREUER, Volker, 16727 Boetzow (DE); WEHMEIER, Lars, 14612 Falkensee (DE)
(74) Representative: Pearl Cohen Zedek Latzer Baratz UK LLP

(57) **Abstract**

Systems and methods for monitoring a network are provided which include: detecting, by a test unit, a trigger condition of a test profile associated with a device under test "DUT" connected to the network to be monitored, the DUT included in the test unit; sending, by the test unit, to a remote server, an indication that the trigger condition was detected; receiving, from the remote server, at the test unit, an instruction to start a trace; starting, by the test unit, a trace routine in response to the instruction to start the trace; sending, by the test unit, to the remote server, an indication that a trace log created by the trace routine is ready; receiving, from the remote server, at the test unit, an instruction to upload the trace log; and uploading, by the test unit, to the remote server, the trace log.

## Description

### FIELD OF THE INVENTION

The invention relates generally to testing as a service (TaaS), in particular network monitoring of a device under test (DUT) using a remote test unit.

### BACKGROUND

Testing devices exist for remote monitoring and testing of a device under test, such as an internet of things (IoT) device deployed in the field. Such devices typically alert a user to an error or crash, and the user must manually start a trace routine to identify the cause of the error or crash.

### BRIEF SUMMARY OF THE INVENTION

According to one or more embodiments of the invention, there is provided a method for monitoring a network, the method comprising: detecting, by a test unit, a trigger condition of a test profile associated with a device under test "DUT" connected to the network to be monitored, the DUT included in the test unit; sending, by the test unit, to a remote server, an indication that the trigger condition was detected; receiving, from the remote server, at the test unit, an instruction to start a trace; starting, by the test unit, a trace routine in response to the instruction to start the trace; sending, by the test unit, to the remote server, an indication that a trace log created by the trace routine is ready; receiving, from the remote server, at the test unit, an instruction to upload the trace log; and uploading, by the test unit, to the remote server, the trace log.

According to some embodiments, the method further comprises: receiving, from the remote server, at the test unit, an indication that the trace log was successfully uploaded; and deleting, from a memory of the test unit, the trace log.

According to some embodiments, the uploading is over a second network different to the network to be monitored.

According to some embodiments, sending and receiving between the test unit and the remote server is over the second network different to the network to be monitored.

According to some embodiments, the instruction to start the trace comprises a filter ID; starting the trace routine comprises applying the filter ID; and the trace log comprises data filtered in accordance with the filter ID.

According to some embodiments, the trigger condition is at least one of: a DUT error; a DUT crash; and/or a predefined change in network performance of the network to be monitored.

According to some embodiments, uploading by the test unit is suspended upon receiving a suspension instruction from the remote server, and wherein the uploading resumes upon receiving a resumption instruction from the remote server.

According to some embodiments, the test unit comprises a first identity module associated with the DUT and the network to be monitored, and a second identity module associated with the remote server.

According to one or more embodiments, there is also provided a system for monitoring a network, the system comprising: a remote server; and a test unit, the test unit comprising: a device under test "DUT"; a test profile associated with the DUT; a first identity module associated with the DUT and the network to be monitored; and a second identity module associated with the remote server, characterised in that the test unit is configured to: detect a trigger condition of the test profile; send, to the remote server, an indication that the trigger condition was detected; receive, from the remote server, an instruction to start a trace; start a trace routine in response to the instruction to start the trace; send, to the remote server, an indication that a trace log created by the trace routine is ready; receive, from the remote server, an instruction to upload the trace log; and upload, to the remote server, the trace log.

According to some embodiments, the test unit is further configured to: receive, from the remote server, an indication that the trace log was successfully uploaded; and delete, from a memory of the test unit, the trace log.

According to some embodiments, the test unit is configured to upload over a second network different to the network to be monitored.

According to some embodiments, the test unit is configured to send and receive to and from the remote server over the second network different to the network to be monitored.

According to some embodiments, the instruction to start the trace comprises a filter ID; the test unit is configured to apply the filter ID when starting the trace routine; and the trace log comprises data filtered in accordance with the filter ID.

According to some embodiments, the trigger condition is at least one of: a DUT error; a DUT crash; and/or a predefined change in network performance of the network to be monitored.

According to some embodiments, the test unit is configured to suspend uploading upon receiving a suspension instruction from the remote server, and is further configured to resume uploading upon receiving a resumption instruction from the remote server.

### BRIEF DESCRIPTION OF THE DRAWINGS

Non-limiting examples of embodiments of the disclosure are described below with reference to figures attached hereto. Dimensions of features shown in the figures are chosen for convenience and clarity of presentation and are not necessarily shown to scale. The subject matter regarded as the invention is particularly pointed out and distinctly claimed in the concluding portion of the specification. The invention, however, both as to organization and method of operation, together with objects, features, and advantages thereof, may be understood by reference to the following detailed description when read with the accompanied drawings. Embodiments are illustrated without limitation in the figures, in which like reference numerals indicate corresponding, analogous, or similar elements, and in which:
Fig. 1 shows a block diagram of an exemplary computing device which may be used with some embodiments of the present invention;
Figs. 2A and 2B show schematic diagrams of a principle of operation of a BlueBox test unit;
Fig. 3 shows a method for monitoring a network, according to some embodiments of the invention;
Fig. 4 shows the remote access principle of the test unit, according to some embodiments of the invention; and
Fig. 5 shows an example message flow between a test unit (e.g. test box) and the remote server, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention can be practiced without these specific details. In other instances, well-known methods, procedures, components, modules, units and/or circuits have not been described in detail so as not to obscure the invention.

Embodiments of the invention address the market of TaaS (Testing as a Service). A test unit, such as a remote test box or unit which may be referred to as a "BlueBox" (c.f. the colloquial Black Box flight recorder) can enable users to test and debug devices and corresponding installed applications (e.g. apps) remotely deployed all over the world. Embodiments of the invention may allow an enhanced tracing and analysis environment for automatic remote testing using a test unit.

Embodiments of the invention may find applications in such industries as Internet of Things (IoT) products, and/or automotive or machine automation, such as robotics, automated guided vehicles (AGVs) or the like.

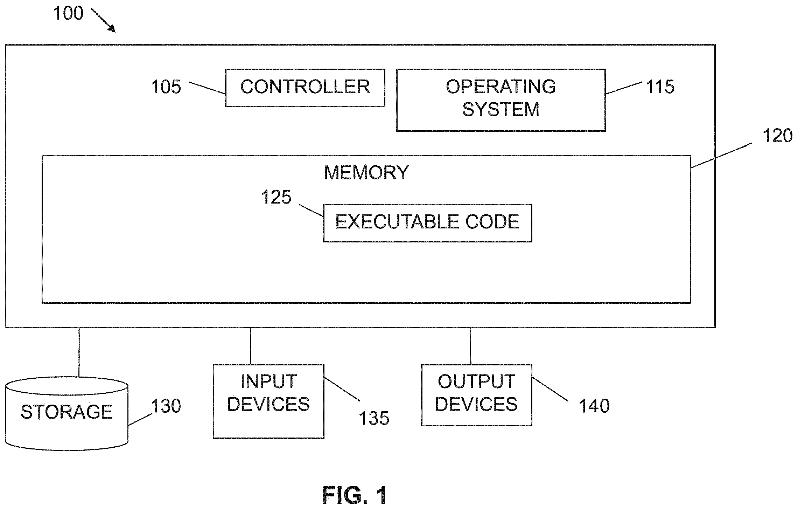

Fig. 1 shows a block diagram of an exemplary computing device 100 which may be used with some embodiments of the present invention. For example, a test unit according to one or more embodiments of the invention may be, or may include one or more components of, a computing device 100 as shown in Fig. 1.

Computing device 100 may include a controller or computer processor 105 that may be, for example, a central processing unit processor (CPU), a chip or any suitable computing device, an operating system 115, a memory 120, a storage 130, input devices 135 and output devices 140 such as a computer display or monitor displaying for example a computer desktop system.

Operating system 115 may be or may include code to perform tasks involving coordination, scheduling, arbitration, or managing operation of computing device 100, for example, scheduling execution of programs. Memory 120 may be or may include, for example, a Random Access Memory (RAM), a dynamic Random Access memory (DRAM) a read only memory (ROM), a programmable read only memory (PROM), an erasable programmable read only memory (EPROM), a Flash memory, a volatile or non-volatile memory, or other suitable memory units or storage units. At least a portion of Memory 120 may include data storage housed online on the cloud, for example hosted on a remote server. Memory 120 may be or may include a plurality of different memory units. Memory 120 may store for example, instructions (e.g., code 125) to carry out methods disclosed herein. Memory 120 may use a datastore, such as a database.

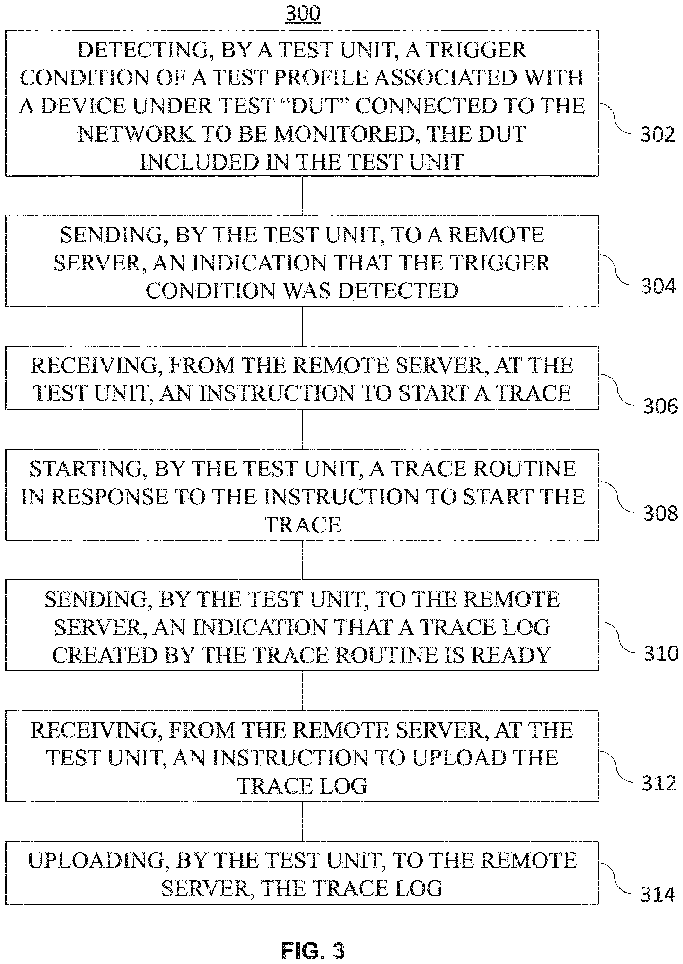

Executable code 125 may be any application, program, process, task, or script. Executable code 125 may be executed by controller 105 possibly under control of operating system 115. For example, executable code 125 may be, or may execute, one or more applications performing methods as disclosed herein, such as method 300 shown in Fig. 3. In some embodiments, more than one computing device 100 or components of device 100 may be used. One or more processor(s) 105 may be configured to carry out embodiments of the present invention by, for example, executing software or code.

Storage 130 may be or may include, for example, a hard disk drive, a floppy disk drive, a compact disk (CD) drive, a universal serial bus (USB) device or other suitable removable and/or fixed storage unit. Data described herein may be stored in a storage 130 and may be loaded from storage 130 into a memory 120 where it may be processed by controller 105. Storage 130 may include cloud storage. Storage 130 may include storing data in a database.

Input devices 135 may be or may include a mouse, a keyboard, a touch screen or pad or any suitable input device or combination of devices. Input devices 135 may include a receiver, such as an antenna receiver. Output devices 140 may include one or more displays, speakers and/or any other suitable output devices or combination of output devices. Output devices 140 may include a transmitter, such as an antenna transmitter. Any applicable input/output (I/O) devices may be connected to computing device 100, for example, a wired or wireless network interface card (NIC), a modem, printer, a universal serial bus (USB) device or external hard drive may be included in input devices 135 and/or output devices 140.

Embodiments of the invention may include one or more article(s) (e.g., memory 120 or storage 130) such as a computer or processor non-transitory readable medium, or a computer or processor non-transitory storage medium, such as for example a memory, a disk drive, or a USB flash memory encoding, including, or storing instructions, e.g., computer-executable instructions, which, when executed by a processor or controller, carry out methods disclosed herein.

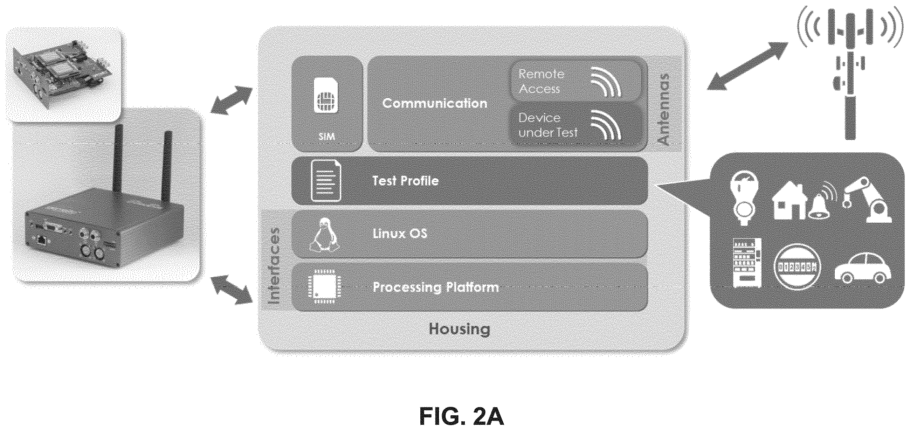

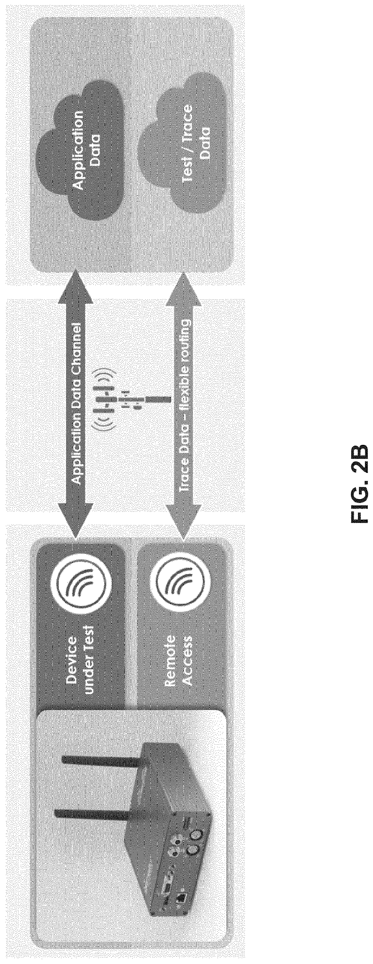

Figs. 2A and 2B show schematic diagrams of a principle of operation of a BlueBox test unit. The test unit comprises a casing/housing, which may protect the internal components. The test unit has a plurality of input/output ports, e.g. Wi-Fi, ethernet, HDMI, and/or USB.

The test unit may also include one or more aerials/antennae for receiving and sending signals, such as data signals encoded in electromagnetic waves such as radio waves and/or microwaves.

The test unit may include one or more interface components for interfacing with the test unit (e.g. by a user). For example the test unit may include a processing platform (such as a motherboard) with components such as a central processing unit (CPU) and computer memory. The interface components may be as described for computing device 100 shown in Fig. 1. For example the test unit may have an installed operating system (OS e.g. operating system 115) such as Linux. Other operating systems may be used.

The test unit also includes a device under test (DUT), which may be a hardware component such as a modem or mobile phone.

The test unit also includes a test profile associated with the device under test. For example, the test profile may be a data file which defines one or more test parameters, configurations, and/or conditions of the test(s) to be carried out on the DUT. For example, the test profile may include a trigger condition, which may be a condition to be monitored during testing by the test unit and once the condition is met, the test unit may perform one or more actions as described herein in response to the condition being triggered. The trigger condition may relate to, for example, a range or threshold value of one or more measurable parameters of the DUT. The trigger condition may relate to logical operators in relation to such a range or threshold value, such as greater than, less than, not equal to, etc. The trigger condition may relate to a Boolean value in relation to one or more parameters of the DUT, for example IS_Connected = False, representing an example loss of network connectivity.

The test unit also includes a first identity module associated with the DUT and a network to be monitored. For example, the DUT may be a cellphone operating on a cellular network, and the first identity module be a SIM card (subscriber identity module) associating the cellphone with the cellular network.

The test unit also includes a second identity module associated with a remote server. For example the second identity module may contain access credentials to access the remote server, for example for bypassing a firewall protecting the remote server. The remote server may be, or may include one or more components of, a computing device 100 as shown in Fig. 1. The remote server may be a cloud-based server.

Embodiments of the invention may therefore increase the capabilities for remote trace analysis, where depending on the device under test the test unit can have a secondary functionality to upload data using separate security credentials, which may be advantageous when low capability devices such as loT devices are tested in combination with a SIM card (USIM, eSIM).

As shown in Fig. 2B, the test unit may communicate application data from the device under test over an application data channel, such as a first network. The test unit may also use a secondary device or functionality having remote access capabilities (such as a modem or identity module with remote access credentials) to communicate test or trace data (for example to a remote server) over a secondary channel, which may be flexibly routable depending on the circumstances of the test unit. A remote server may provide an indication to the test unit about which network or channel to use to upload trace data, and may provide the necessary access credentials for this purpose.

Fig. 3 shows a method 300 for monitoring a network, according to some embodiments of the invention.

Method 300 may include detecting, by a test unit, a trigger condition of a test profile associated with a device under test "DUT" connected to the network to be monitored, the DUT included in the test unit (Step 302). The test unit may be a test unit as discussed above.

The trigger condition may be, for example, at least one of a DUT error, a DUT crash, and/or a predefined change in network performance of the network to be monitored. For example if a network speed falls below a predefined threshold, this may be detected by the test unit as the trigger condition.

Method 300 may include sending, by the test unit, to a remote server, an indication that the trigger condition was detected (Step 304). The test unit may include an identity module identifying the test unit to the remote server and allowing access to the remote server. The sending may be performed automatically, e.g. without the need for a user to send such indication manually (for example using an interface) to the remote server. The event to system response (e.g. between detecting the trigger condition and automatically sending the indication) may be on the order of micro- or milliseconds, which may generally be understood as being "real time" within the meaning of computing.

Method 300 may include receiving, from the remote server, at the test unit, an instruction to start a trace (Step 306). The instruction may include data relating to a type of trace and/or extent of trace requested by the remote server. For example, the instruction to start the trace may comprise a filter ID. The filter ID may relate to, for example, a time range or a set of parameters to measure. For example the set of parameters to measure may include one or more of: protocol instance related messages, messages of a certain layer protocol, MAC (media access control), RLC (radio link control), RRC (radio resource control) or the like.

Method 300 may include starting, by the test unit, a trace routine in response to the instruction to start the trace (Step 308). Starting the trace routine may be performed automatically in real-time by the test unit in response to the instruction to start the trace. For example, a user need not manually start a trace routine.

Method 300 may include sending, by the test unit, to the remote server, an indication that a trace log created by the trace routine is ready (Step 310). The trace log may be an output of the trace routine, and may include relevant data useful in identifying the cause(s) of an error. For example the trace log may include an error code, a status of the DUT leading up to the trigger condition (for example in a predefined window of time before the trigger condition), or the like.

Method 300 may include receiving, from the remote server, at the test unit, an instruction to upload the trace log (Step 312). For example, the remote server may give an instruction at or in advance of an appropriate time for the trace log to be uploaded. The inventors have identified that this may provide an advantage of conserving network and/or test unit resources. For example, if the DUT error was due to a network connectivity issue, the test unit may also be faced with such a network connectivity issue (for example a power cut in the local area in which the test unit and associated DUT are deployed). In such circumstances, it may not therefore be a suitable time to attempt to upload the trace log, and the test unit may wait to receive an instruction from the remote server to upload the trace log.

As another example, the remote server may instruct the test unit to the upload the test log at a "quieter " network time, for example a time when the network is supporting less data traffic.

Method 300 may include uploading, by the test unit, to the remote server, the trace log (Step 314). For example, following the instruction to upload, the test unit may upload the trace log. In some embodiments, the uploading is over a second network different to the network to be monitored. As an example, the network being monitored (e.g. first network) may be a cellular network, and the second network used for uploading may be a wi-fi network. The first and second networks may be, for example, provided by different mobile network operators (MNOs), for example the first network may be a cellular network operated by a first MNO and the second network may be a cellular network operated by a second MNO.

In some embodiments, sending and/or receiving between the test unit and the remote unit (e.g. Steps 304, 306, 310, 312) is over the second network different to the network being monitored. For example, the test unit may send indications and/or receive instructions over the second network, such as a Wi-Fi network where the first network is a cellular network.

According to some embodiments of the invention, the step of uploading by the test unit (e.g. Step 314) is suspended upon receiving a suspension instruction from the remote server. The uploading may resume upon receiving a resumption instruction from the remote server. Such a suspension instruction may be sent by the remote server to delay upload on a momentarily active connection in view of network circumstances, and may allow for a more suitable network connection to become available to upload the trace log.

In some embodiments, method 300 may further include receiving, from the remote server, at the test unit, an indication that the trace log was successfully uploaded; and deleting, from a memory of the test unit, the trace log. For example, the test unit may have limited memory size and it may therefore be advantageous to delete trace logs upon confirmation of successful upload in order to free up memory and data storage space within the test unit. For example, once the trace log is uploaded to the server the crash dump in the device can be deleted thereby making storage available for further traces.

As discussed, in some embodiments the instruction to start the trace comprises a filter ID. Starting the trace routine (e.g. Step 308) may comprise applying the filter ID. For example, the test unit may use the filter ID to generate a filter mask to selectively include or exclude data which will appear in the trace log. As such, the trace log may comprise data filtered in accordance with the filter ID.

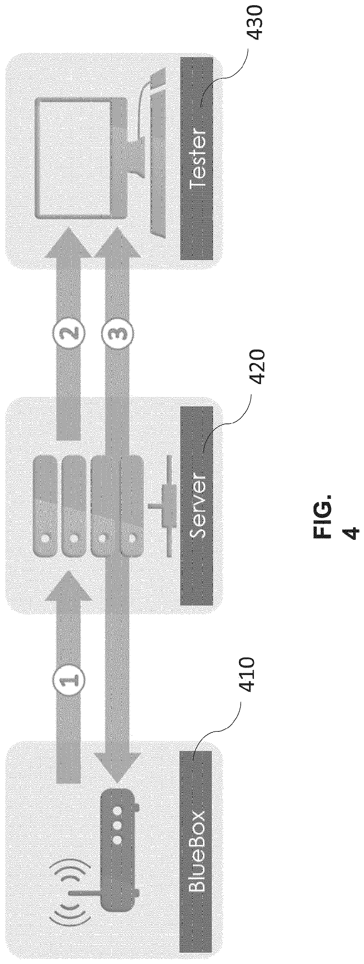

Fig. 4 shows the remote access principle of the test unit, according to some embodiments of the invention.

After registration of the first identity module (e.g. remote registration of a SIM card), the test unit (410) may connect to the remote server (Arrow 1). The remote server (420) may assign an ID to the test unit. The remote server may maintain a list of registered test units, and make these available to users (Arrow 2). A user can then select a test unit, for example using the ID, on their computing device 430 (such as a personal computer) to perform manual remote testing (Arrow 3).

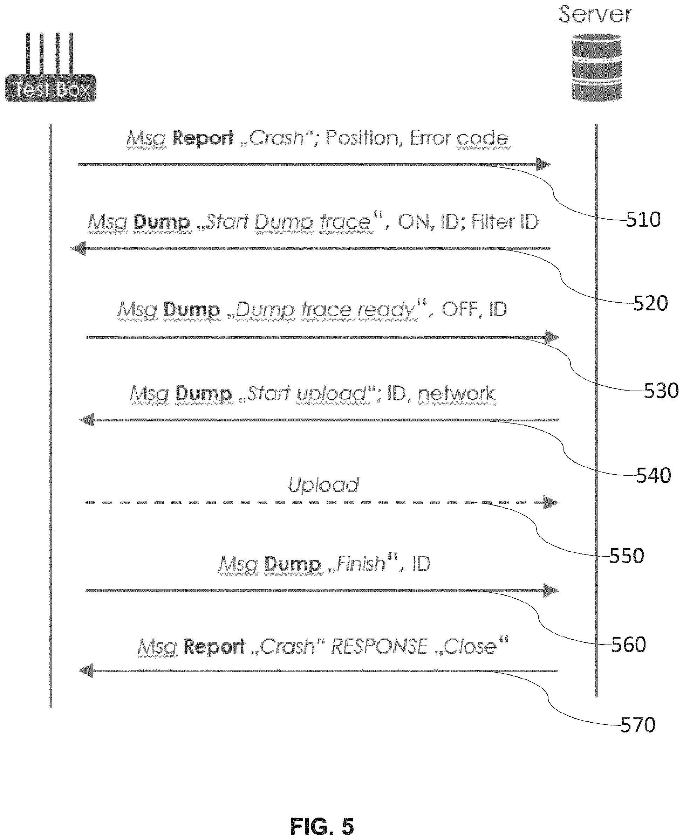

Fig. 5 shows an example message flow between a test unit (e.g. test box) and the remote server, according to some embodiments of the invention.

The test box/unit may send a message (510) reporting a crash to the remote server. Message 510 may be sent in response to the test unit detecting a defined trigger condition for the device under test defined in a test profile. Accordingly, message 510 constitutes an indication that the trigger condition was detected.

Message 510 may include a position (e.g. data to estimate a position, such as GPS coordinates or signal time of arrival) and an error code. Message 510 may include information related to the crash and the device under test experiencing the crash, a total trace size, information on momentary connection status of the DUT (e.g. first device) or the test unit (e.g. second device), current radio conditions, active SIM card data limitations. Accordingly, message 510 may include data or a set of information which allows the server to decide what will be the best way to retrieve the crash data from the test unit.

Furthermore based on the identity used to report on the crash (including SIM) the server can derive whether an identity switch or the provision of an additional identity is necessary prior to uploading the crash is necessary or whether delayed upload is preferred.

The server may send a message 520 to start a dump trace. Message 520 may include information on the trace dump upload configuration, for example a special filter setting (e.g. determined by a filter ID) to receive the trace in an appropriate form and for the test unit to transfer only the relevant parts of the trace thereby avoiding uploading the full trace. Accordingly, message 520 constitutes an instruction to start a trace.

The test unit may apply the filter ID as a trace mask configuration. Once the trace is ready, the test unit may send a message 530 indicating that the trace dump is ready.

The remote server may send a message 540 indicating to the test unit to start the upload of the trace. The remote server may delay the sending of message 540. Delayed trace upload may allow cost-efficient tracing and handling especially during low connectivity hours of the corresponding network. Delaying the trace upload may also balance the load distribution on the network. For example, due to network traffic the cost of sending data (which may be large, e.g. greater than 1MB) may be prohibitively expensive, and it may be desirable to delay the upload until the network is less busy. Message 540 may also include an indication of which network to use to upload the trace.

The test unit may then upload the trace, represented as arrow 550. The test unit may send message 560 indicating that the upload is finished once the trace has been uploaded.

The server may send a message 570 with an indication to "close", for example confirming the successful reception of the trace and the test unit can close the trace operation. The message 570 crash dump close command may contain instructions to the test unit to free the storage and delete the data, thereby providing a means to segment the crash-upload and proceed with further, more detailed, crash dump information/upload at a later time if the data should not be deleted. This may mean that the server can use a crash ID and identity of the test unit to form a pair for which several different crash dump traces segmented by layers (e.g. Layer 1, 2, 3, such as radio resource control "RCC", medium access control "MAC", radio link control "RLC", packet data convergence protocol "PDCP", etc....) or a timely segmentation can be performed. For example, after a first analysis performed the a user can configure the server to retrieve further crash dump information from the test unit by tasking the server to retrieve said information at a next evaluation session, for example using a different filter.

In addition also the special credentials provided for the upload may be released. As a consequence, only a few trace identities with unlimited upload may be needed which are flexibly assigned and revoked from the Blue Boxes, allowing to maintain an unlimited fleet of BlueBoxes. Furthermore assigned upload times may allow flexible handling also to stagger the tracing transfer considering large volumes of trace devices to be handled and not to overload network or server or create extra costs.

Embodiments of the invention may be used for debugging purposes all around the world automatically without any human interaction, based on the defined test profile and trigger conditions. Accordingly, embodiments of the invention may save time and efforts of defect and root cause analysis, as well as enable a testing-as-a-service TaaS principle so that customers can use the test unit any time anywhere.

In contrast to existing methods and systems for error detection, the solutions provided by embodiments of the invention are not based on human interactions. An automatic error detection, tracing and upload solution as provided by embodiments of the invention is therefore advantageous.

In addition the method contains the necessary control to perform the uploads via the secondary device (e.g. modem with identity module for accessing the remote server) or with special configuration with different capabilities being especially entitled to control the BlueBox and the remote tracing upload.

DUTs under test experiencing unstable connection conditions or having limited data rate capabilities by its registration can't directly upload the enhanced tracing and hence in such cases the server can interact potentially with the secondary device or provide credentials, an identity being suitable for upload of large crash dumps not facing any data or registration limitations. Or suffering from the instability of the DUT in said environment as such.

Unless specifically stated otherwise, as apparent from the foregoing discussion, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Embodiments of the invention may include an article such as a computer or processor readable non-transitory storage medium, such as for example a memory, a disk drive, or a USB flash memory encoding, including, or storing instructions, e.g., computer-executable instructions, which when executed by a processor or controller, cause the processor or controller to carry out methods disclosed herein.

It should be recognized that embodiments of the invention may solve one or more of the objectives and/or challenges described in the background, and that embodiments of the invention need not meet every one of the above objectives and/or challenges to come within the scope of the present invention. While certain features of the invention have been particularly illustrated and described herein, many modifications, substitutions, changes, and equivalents may occur to those of ordinary skill in the art. It is, therefore, to be understood that the appended claims are intended to cover all such modifications and changes in form and details as fall within the true spirit of the invention.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment. While the invention has been described with respect to a limited number of embodiments, it should be understood by a person of ordinary skill in the art that one or more features from one particular embodiment or group of embodiments may be combined with features of another embodiment or group of embodiments.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purposes only.

It is to be understood that the details set forth herein do not construe a limitation to an application of the invention.

It is to be understood that the terms "including", "comprising", "consisting" and grammatical variants thereof do not preclude the addition of one or more components, features, steps, or integers or groups thereof and that the terms are to be construed as specifying components, features, steps, or integers.

If the specification or claims refer to "an additional" element, that does not preclude there being more than one of the additional elements.

It is to be understood that where the claims or specification refer to "a" or "an" element, such reference is not to be construed that there is only one of that element.

It is to be understood that where the specification states that a component, feature, structure, or characteristic "may", "might", "may" or "could" be included, that a particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

## Claims

1. A method for monitoring a network, the method comprising:
detecting, by a test unit, a trigger condition of a test profile associated with a device under test "DUT" connected to the network to be monitored, the DUT included in the test unit;
sending, by the test unit, to a remote server, an indication that the trigger condition was detected;
receiving, from the remote server, at the test unit, an instruction to start a trace;
starting, by the test unit, a trace routine in response to the instruction to start the trace;
sending, by the test unit, to the remote server, an indication that a trace log created by the trace routine is ready;
receiving, from the remote server, at the test unit, an instruction to upload the trace log; and
uploading, by the test unit, to the remote server, the trace log.

2. The method of claim 1, further comprising:
receiving, from the remote server, at the test unit, an indication that the trace log was successfully uploaded; and
deleting, from a memory of the test unit, the trace log.

3. The method of claim 1 or 2, wherein the uploading is over a second network different to the network to be monitored.

4. The method of claim 3, wherein sending and receiving between the test unit and the remote server is over the second network different to the network to be monitored.

5. The method of any of claims 1-4, wherein:
the instruction to start the trace comprises a filter ID;
starting the trace routine comprises applying the filter ID; and
the trace log comprises data filtered in accordance with the filter ID.

6. The method of any of claims 1-5, wherein the trigger condition is at least one of:
a DUT error;
a DUT crash;
a predefined change in network performance of the network to be monitored.

7. The method of any of claims 1-6, wherein uploading by the test unit is suspended upon receiving a suspension instruction from the remote server, and wherein the uploading resumes upon receiving a resumption instruction from the remote server.

8. The method of any of claims 1-7, wherein the test unit comprises a first identity module associated with the DUT and the network to be monitored, and a second identity module associated with the remote server.

9. A system for monitoring a network, the system comprising:
a remote server; and
a test unit, the test unit comprising:
a device under test "DUT";
a test profile associated with the DUT;
a first identity module associated with the DUT and the network to be monitored; and
a second identity module associated with the remote server,
**characterised in that** the test unit is configured to:
detect a trigger condition of the test profile;
send, to the remote server, an indication that the trigger condition was detected;
receive, from the remote server, an instruction to start a trace;
start a trace routine in response to the instruction to start the trace;
send, to the remote server, an indication that a trace log created by the trace routine is ready;
receive, from the remote server, an instruction to upload the trace log; and
upload, to the remote server, the trace log.

10. The system of claim 9, wherein the test unit is further configured to:
receive, from the remote server, an indication that the trace log was successfully uploaded; and
delete, from a memory of the test unit, the trace log.

11. The system of claim 9 or 10, wherein the test unit is configured to upload over a second network different to the network to be monitored.

12. The system of claim 11, wherein the test unit is configured to send and receive to and from the remote server over the second network different to the network to be monitored.

13. The system of any of claims 9-12, wherein:
the instruction to start the trace comprises a filter ID;
the test unit is configured to apply the filter ID when starting the trace routine; and
the trace log comprises data filtered in accordance with the filter ID.

14. The system of any of claims 9-13, wherein the trigger condition is at least one of:
a DUT error;
a DUT crash;
a predefined change in network performance of the network to be monitored.

15. The system of any of claims 9-14, wherein the test unit is configured to suspend uploading upon receiving a suspension instruction from the remote server, and is further configured to resume uploading upon receiving a resumption instruction from the remote server.
